# EUROPEAN PATENT SPECIFICATION

(11) **EP 2 093 445 B1**
(45) Date of publication and mention of the grant of the patent: **29.10.2014**
(21) Application number: 09250432.3
(22) Date of filing: 19.02.2009
(51) Int. Cl.: F16D 13/52, F16D 13/58, F16D 43/12, F16D 13/04

(54) **Friction clutch**
Reibungskupplung
Embrayage à friction

(30) Priority: 25.02.2008 JP 2008043510
(43) Date of publication of application: 26.08.2009
(73) Proprietor: Yamaha Hatsudoki Kabushiki Kaisha, Shizuoka-ken Shizuoka 438-8501 (JP)
(72) Inventor: Toshinori, Inomori, Iwata-shi, Shizuoka-ken 438-8501 (JP); Yousuke, Ishida, Iwata-shi, Shizuoka-ken 438-8501 (JP)
(74) Representative: Zimmermann, Tankred Klaus

(56) References cited:
- EP-A2- 0 277 938
- DE-A1-102005 048 198
- GB-A- 1 529 015
- JP-A- 8 232 981
- JP-A- 52 004 955
- JP-A- 2003 322 177
- US-A- 5 201 233

## Description

### Technical Field

The present invention relates to a friction clutch.

### Background Art

There is conventionally known a friction clutch structured to restrict positions of constituent elements of the friction clutch such as plates and a clutch spring related to rotation of a clutch shaft in an axial direction of the clutch shaft. The friction clutch having such a structure is, for example, a friction clutch described in Japanese Patent Application Laid-Open No. 2003-322177.

The friction clutch described in JP2003-322177 is a multiple-disc automatic centrifugal friction clutch used in a motorcycle. The multiple-disc automatic centrifugal friction clutch includes a clutch shaft (=main shaft), a drive plate (=friction plate), and a driven plate (=clutch plate). Furthermore, the multiple-disc automatic centrifugal friction clutch includes a weight roller (=centrifugal weight) and a pressure plate. The pressure plate and the drive plate can slidably move in an axial direction (=thrust direction) of the clutch shaft. By movement of the pressure plate in the thrust direction, the drive plate and the driven plate are pressed. The weight roller receives a centrifugal force by rotation of the clutch shaft and moves radially outward of the clutch shaft. The centrifugal force of the weight roller is converted into a pressing force in the thrust direction of the pressure plate by an internal structure of the clutch. The drive plate and the driven plate are pressed by the pressing force of the pressure plate. The drive plate and the driven plate which are pressed transmit a drive force of an engine of the motorcycle to a rear wheel.

Moreover, the multiple-disc automatic centrifugal friction clutch includes a clutch plate spring (=clutch spring) generating the pressing force of the pressure plate. Namely, the clutch plate spring presses the drive plate and the driven plate. Further, the pressurization on the drive plate and the driven plate should hold the drive plate and the driven plate at predetermined positions at predetermined intervals. Due to this, the multiple-disc automatic centrifugal friction clutch includes a circlip (retaining ring) for restricting positions of constituent elements of a clutch housing such as the pressure plate, the drive plate, the driven plate, the centrifugal weight, and the clutch plate spring in the axial direction of the clutch shaft. This circlip is fitted into the clutch housing covering up the drive plate and the driven plate included in the clutch. A position at which the circlip is fitted into the clutch housing is one end side of the clutch housing in the axial direction of the clutch shaft. The circlip restricts positions of the constituent elements of the clutch housing such as the plate, the centrifugal weight, and the clutch plate spring related to rotation of the clutch shaft in the axial direction of the clutch shaft by being fitted into the clutch housing. Further, the circlip receives a reaction force to an urge force of the clutch plate spring and prevents detachment of such plates as the drive plate and the driven plate from the clutch housing by being fitted into the clutch housing.

However, if power of the engine is improved in a motorcycle or the like, it is necessary to ensure transmitting the drive force of the high-power engine. Due to this, the clutch serving as a transmission mechanism transmitting the drive force of the engine is configured, for example, so that diameters of the plates including the friction plate and the clutch plate are increased so as to correspond to the high-power engine. In the clutch having such larger-diameter plates, a diameter of the circlip preventing detachment of such plates as the friction plate and the clutch plate is also made larger.

Nevertheless, the inventor of the present application has discovered from various experiments that the circlip often detaches from the clutch housing in the friction clutch including the larger-diameter circlip.

The present invention has been made in view of known systems. It is an object of one aspect of the present invention to prevent a retaining ring (such as a circlip) from detaching from a clutch housing.

The inventor of the present application has identified that a cause for detachment of the circlip is a radially inward deformation of the circlip.

Namely, it is considered that a shape of the circlip and a load imposed on the circlip influence the detachment of the circlip. The circlip has a substantially circular shape and an outer circumferential side of the circlip is fitted into the clutch housing. Therefore, this follows that the deformation of the circlip tends to occur on an inner circumferential side rather than on the outer circumferential side. This deformation is considered to result from the fact that the circlip has a substantially circular shape and has a so-called C shape having a slit formed in a part of the circlip.

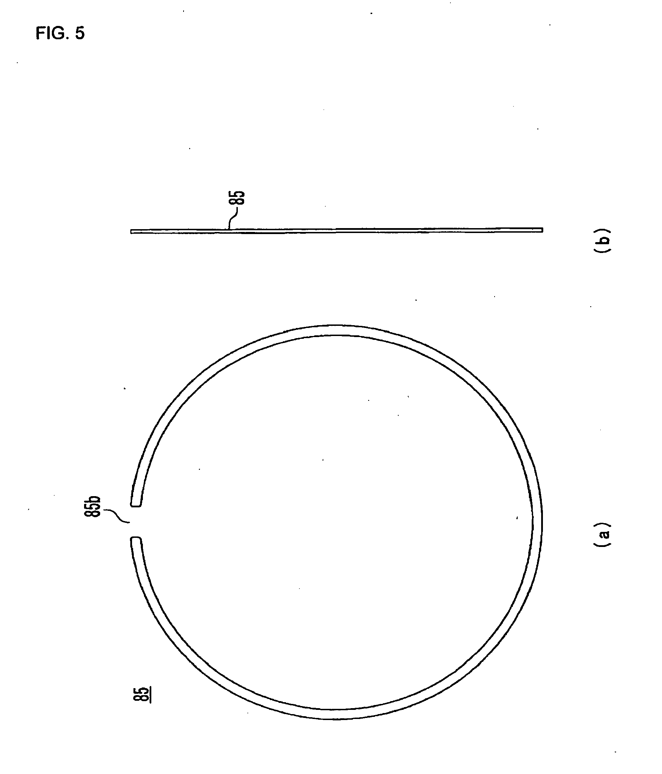

The C-shaped circlip is, for example, a circlip shown in Fig. 5. This circlip has a slit unit 85b. When this circlip is fitted into a clutch housing, a diameter of an outer circumference side of the circlip is temporarily reduced to be smaller than an inner hull of the clutch housing. The diameter of the circlip is reduced by, for example, applying a force from an outer circular arc of this circlip so that the slit unit 85b contacts left and right portions of the circlip separated by the slit unit 85b with each other. The circlip fitted into the clutch housing generates a force extending the diameter (hereinafter, referred to as "extension force"). This extension force enables the inner hull of the clutch housing and the outer circumferential side of this circlip to contact each other.

Furthermore, similarly to the clutch described in JP2003-322177, the clutch employing the circlip shown in Fig. 5 often includes a clutch spring (clutch plate spring). In this case, similarly to the circlip described in JP2003-322177, a circlip 85 is fitted into the clutch housing, thereby receiving a reaction force to the urge force of the clutch spring. The reaction force to the urge force of the clutch housing causes front and rear surfaces (front and rear surfaces on a sheet of Fig. 5(a)) of the circlip to contact with the clutch housing. The contact of the circlip 85 with the clutch housing allows the circlip 85 and the clutch housing to generate a frictional force in a portion in which the circlip 85 and the clutch housing contact each other.

Moreover, if the clutch including the circlip 85 is a centrifugal clutch similar to the clutch described in JP2003-322177, a magnitude of the reaction force to the urge force of the clutch spring changes according to a change in a rotational speed of the clutch shaft. Namely, in case of the clutch described in JP2003-322177, for example, the weight roller receives the centrifugal force and moves radially outward of the clutch shaft by rotation of the clutch shaft. The centrifugal force of the weight roller is converted into the pressing force in the thrust direction of the pressure plate by the internal structure of the clutch. The drive plate and the driven plate are pressed by the pressing force of the pressure plate. During pressing the drive plate and the driven plate, the drive plate and the driven plate are forced to separate from each other by mutual resistance forces or the like. Due to this, the clutch includes the clutch plate spring as means for urging the pressing force. If the rotational speed of the clutch shaft is higher, the clutch plate spring needs a greater urge force for the pressing on the drive plate and the driven plate. In this way, if the urge force of the clutch disc spring is relatively great, the circlip receives a greater reaction force to the urge force of the clutch plate spring. If the reaction force to the urge force of the clutch plate spring is greater, a greater frictional force is generated in the portion of the circlip in which the circlip contacts with the clutch housing.

Further, as the clutch shaft rotates, a centrifugal force is generated at mass points on a circular portion of the circlip. This centrifugal force is greater if the rotational speed of the clutch shaft is higher. This centrifugal force and the extension force of the circlip described previously enable the circlip to contact with the inner hull of the clutch housing on the outer circumferential side of the circlip.

As stated above, the outer circumferential side of the circlip contacts with the inner hull of clutch housing by the extension force radially outward of the circlip. Further, the circlip receives the reaction force to the urge force of the clutch spring. The front and rear surfaces (front and rear surfaces on the sheet of Fig. 5(a)) of the circlip contact with the clutch housing by the reaction force of the clutch housing to the urge force. Due to this, the frictional force is generated in the portion in which the circlip contacts with the clutch housing. However, the frictional force applied to the portion in which the circlip contacts with the clutch housing is not uniform on the entire circlip. Namely, the frictional force of the friction with the clutch housing differs in magnitude or the like among the mass points on the circlip. This results from the fact that a shape of the outer circumferential side of the circlip does not completely coincide with that of the inner hull of the clutch housing. Furthermore, surfaces of the circlip and the clutch housing are not completely flat physically, so that portions in which the clutch housing contacts with the circlip with very small space therebetween are present. Besides, during driving of the engine related to actuation of the clutch, the frictional force is considered to change at the respective mass points on the circlip.

If the frictional force changes at the respective mass points on the circlip, the circlip is considered to deform. However, the outer circumferential side of the circlip can contact with the inner hull of the clutch housing. Due to this, it is considered that the inner circumferential side of the circlip deforms more easily than the outer circumferential side thereof.

EP 0277938 A2 discloses a screw compressor unit including a centrifugal clutch. In the clutch, an inner disc is urged against a presser plate by annular springs. The annular springs rest against a support ring retained by a spring ring which engages in an annular groove in longitudinal ribs formed on an outer surface of a hollow shaft forming a driving shaft member.

From these viewpoints, the inventor of the present application has conducted studies about the radially inward deformation of the circlip and finally attained the following invention.

The invention provides a friction clutch according to claim 1.

As stated above, according to the present invention, it is possible to prevent detachment of the retaining ring (circlip or the like) from the clutch housing.

### Brief Description of the Drawings

Embodiments of the invention will be described hereinafter, by way of example only, with reference to the accompanying drawings in which:
Fig. 1 is a side view of a motorcycle;
Fig. 2 is a configuration diagram of principal elements of a power unit;
Fig. 3 is a cross-sectional view of a clutch;
Fig. 4 is a perspective view showing a clutch housing seen from obliquely upward;
Figs. 5(a) and 5(b) show a circlip according to a first embodiment, wherein Fig. 5 (a) is a front view and Fig. 5(b) is a cross-sectional view of the invention;
Figs. 6 (a) and 6 (b) show a retainer according to the first comparative example not belonging to the invention, wherein Fig. 6 (a) is a front view and Fig. 6 (b) is a cross-sectional view;
Fig. 7 is a front view showing a state in which the retainer and the circlip are attached to a clutch housing according to the first comparative example not belonging to the invention;
Fig. 8 is an enlarged cross-sectional view of a clutch according to the first comparative example not belonging to the invention;
Figs. 9(a) and 9(b) show a retainer according to a first modification not belonging to the invention, wherein Fig. 9(a) is a front view and Fig. 9(b) is a cross-sectional view;
Fig. 10 is a front view showing a state in which the retainer and a circlip are attached to a clutch housing according to the first modification not belonging to the invention;
Fig. 11 is an enlarged cross-sectional view of a clutch according to the first modification not belonging to the invention;
Figs. 12 (a) and 12 (b) show a retainer according to an embodiment of the invention, wherein Fig. 12 (a) is a front view and Fig. 12 (b) is a cross-sectional view;
Fig. 13 is a front view showing a state in which the retainer and a circlip are attached to a clutch housing according to the embodiment of the invention;
Fig. 14 is an enlarged cross-sectional view of a clutch according to the embodiment of the invention;
Figs. 15 (a) and 15 (b) show a retainer according to a second comparative example not belonging to the invention, wherein Fig. 15 (a) is a front view and Fig. 15(b) is a cross-sectional view;
Figs. 16(a) and 16(b) show a circlip according to the second comparative example not belonging to the invention, wherein Fig. 16 (a) is a front view and Fig. 16(b) is a cross-sectional view;
Fig. 17 is a front view showing a state in which the retainer and the circlip are attached to a clutch housing according to the second comparative example not belonging to the invention; and
Fig. 18 is an enlarged cross-sectional view of a clutch according to the second comparative example not belonging to the invention.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, falling within the scope of the present invention as defined by the appended claims.

### Detailed Description

Prior to description of embodiments of the present invention, background of the present invention will be described first.

As already stated, in the clutch having larger-diameter plates such as the friction plate and the clutch plate, the diameter of the circlip preventing detachment of such plates as the friction plate and the clutch plate is also made larger. Furthermore, since it is necessary to increase the pressing force of the pressure plate pressing the friction plate and the clutch plate, the urge force of the clutch spring urging this pressing force is also increased. If the urge force of the clutch spring is greater, the load imposed on the circlip receiving the reaction force to the urge force of the clutch spring becomes heavier.

The centrifugal force is generated at the respective mass points on the circlip when the clutch shaft rotates during driving of the engine. In the high-power engine, a greater centrifugal force according to a mass of the circlip is generated in an entire larger-diameter circlip than a smaller-diameter circlip. Moreover, if the clutch shaft rotates at high rotational speed by being driven by the engine at high engine speed, a greater centrifugal force is generated than that generated when the clutch shaft rotates at low rotational speed.

Furthermore, a length of a circular arc on the outer circumferential side of the circlip in contact with the inner hull of the clutch housing is according to the diameter of the circlip. Due to this, if the circlip has a larger diameter, a contact area between the inner hull of the clutch housing and the outer circumferential side of the circlip is larger. Therefore, the frictional force generated between the outer circumferential side of the larger-diameter circlip and the inner hull of the clutch housing is relatively great by as much as an increase in the contact area.

The detachment of the circlip is conspicuously recognized when the drive force is instantaneously recovered from driving of the engine at high engine speed. Namely, the detachment of the circlip is a phenomenon that occurs when a throttle valve used to drive the engine is closed to a minimum opening position instantaneously from a maximum opening position. Due to this, the inventor of the present application has considered, as a cause for the detachment of the circlip, a sudden drop in the rotational speed of the clutch shaft and a sudden drop in the centrifugal force on the entire circlip, accordingly. Further, when the centrifugal force of the entire circlip suddenly drops, it is considered that the frictional force between the circlip and the clutch housing also suddenly falls. The circlip for which the frictional force between the circlip and the clutch housing falls is considered to rotate relatively to the clutch housing. The relative rotation of the circlip to the clutch housing is considered to result from sliding of the circlip having an inertial force generated by the rotation of the clutch shaft on the clutch housing having the reduced frictional force.

As already stated, the frictional force differs among the mass points on the circlip in the magnitude or the like. Due to this, during the relative rotation of the circlip to the clutch housing, it is considered that the inertial force is greater than the frictional force at some mass points and that the frictional force is greater than the inertial force at other mass points. Therefore, the inventor of the present application has estimated that the circlip deforms according to changes in the magnitude or the like of the frictional force at the respective mass points on the circular portion of the circlip.

In JP2003-322177, the shape of the circlip is not limited to a specific shape. However, as the shape of the circlip, the circular C shape (see Fig. 5) is popular and normally adopted. Due to this, the inventor of the present application has used a C-shaped circlip in a clutch without exception. As shown in Fig. 5, the circlip 85 includes the slit unit 85b in one certain portion. Since the outer circumferential side of the circlip 85 is fitted into the clutch housing, the deformation of the outer circumferential side of the circlip 85 less occurs. However, the inner circumferential side of the circlip 85 is considered to deform more easily than the outer circumferential side thereof.

If the inner circumferential side of the circlip 85 deforms radially inward, the circlip 85 often temporarily detaches from the portion (clutch housing) held in the clutch instantaneously. Even if a detached portion is only a part of the circlip 85, the circlip 85 instantaneously detaches from the clutch housing by the great urge force of the clutch spring.

Therefore, an interior of the clutch is configured to suppress the radially inward deformation of the circlip so as to be able to prevent the detachment of the circlip from the clutch housing.

A vehicle including a centrifugal clutch according to embodiments of the present invention will be described hereinafter in detail with reference to the drawings. It is to be noted, however, that the vehicle described below is only an example of a preferred mode for carrying out the present invention. The vehicle according to the present invention is not limited to a motorcycle 1. In the present specification, the motorcycle is a vehicle of a type in which the vehicle body is leaned at the time of a turn. The motorcycle mentioned herein is not limited to a two-wheeled vehicle but may be a vehicle having three or more wheels.

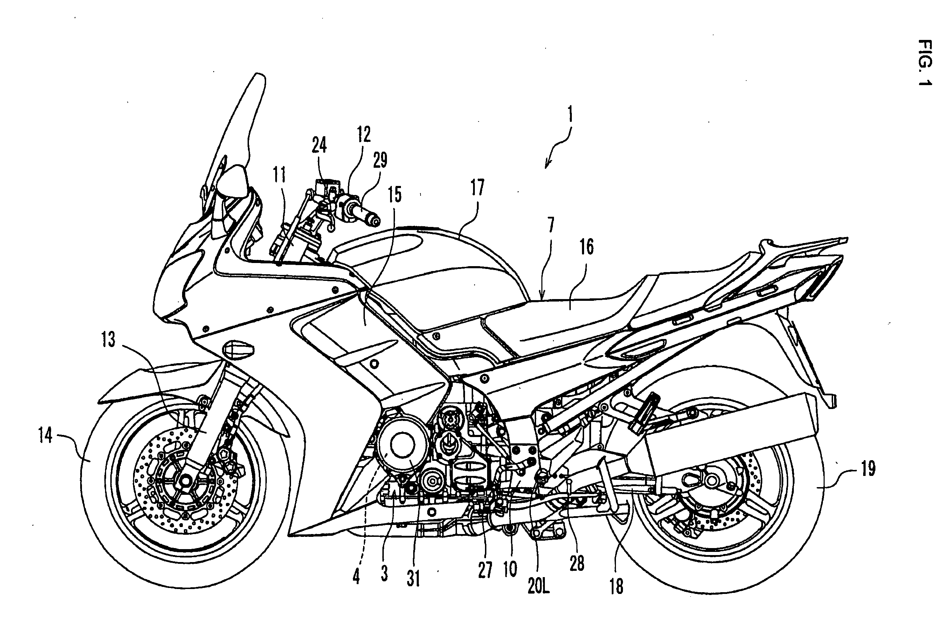

Fig. 1 is a left side view of the motorcycle 1 according to an embodiment. In the following description, it is assumed that longitudinal and crosswise directions are directions viewed from a passenger seated on a seat 16 to be described later.

As shown in Fig. 1, the motorcycle 1 includes a vehicle main body 7, a front wheel 14 provided in front of the vehicle main body 7, and a rear wheel 19 provided in rear of the vehicle main body 7.

The vehicle main body 7 includes a body frame 10. The body frame 10 includes a head pipe 11. A handle 12 is attached to an upper end of the head pipe 11. The front wheel 14 is rotatably attached to a lower end of the head pipe 11 via a front fork 13.

A power unit 3 is suspended on the body frame 10. A vehicle cover 15 is attached to the body frame 10. The seat 16 is arranged from a substantially central portion of the vehicle main body 7 to a rear side thereof in the longitudinal direction. A fuel tank 17 is arranged in front of the seat 16.

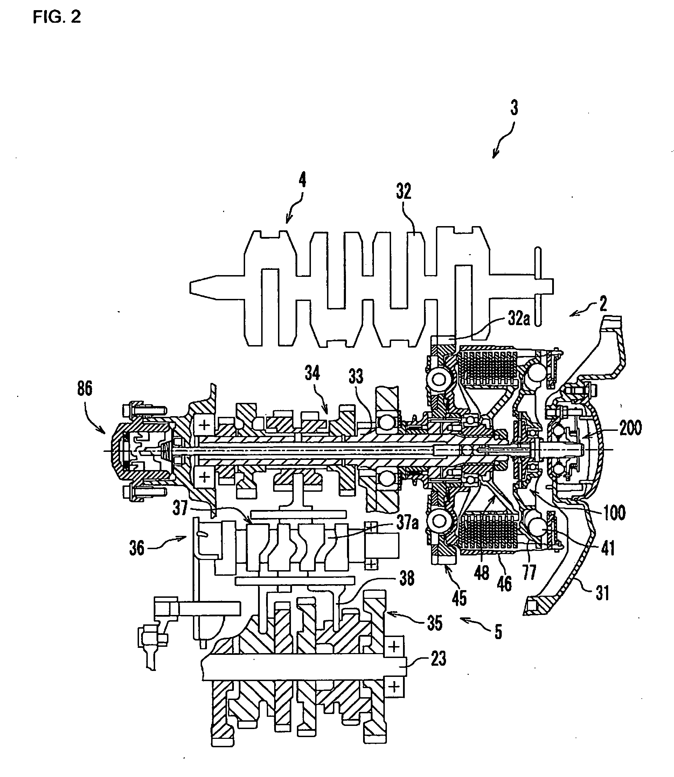

A rear arm 18 is pivotally supported on the body frame 10. The rear wheel 19 serving as a driving wheel is rotatably attached to a rear end of the rear arm 18. The rear wheel 19 is coupled to an engine 4 (see Fig. 2) via a power transmission mechanism that is not shown. Power of the engine 4 is thereby transmitted to the rear wheel 19 to rotate the rear wheel 19.

An accelerator grip, not shown, serving as an accelerator manipulating element is provided on the right of the handle 12. A left grip 29 is provided on the left of the handle 12. Further, a clutch lever 24 serving as a clutch manipulating element operated if a clutch 2 (see Fig. 2), to be described later, is to be disengaged is provided on the left of the handle 12 in front of the left grip 29.

A footrest 20L is provided in a central portion of each of left and right sides of the vehicle main body 7 in the longitudinal direction. A shift pedal 27 operated if a transmission gear ratio of a transmission 5 (see Fig. 2), to be described later, is to be changed is provided on the left of the vehicle main body 7 and slightly forward of the left footrest 20L. A side stand 28 is provided on the left of the vehicle main boy 7 and below the shift pedal 27 and the footrest 20L.

Referring to Fig. 2, a configuration of principal elements of the power unit 3 will next be described. As shown in Fig. 2, the power unit 3 includes the engine 4, the transmission 5, and the clutch 2. Although the type of the engine 4 is not limited to a specific type, the engine 4 is a water-cooled, four-stroke cycle, transverse four-cylinder engine according to the embodiment.

Although not shown, the engine 4 includes four cylinders, pistons reciprocating in the cylinders, respectively, and a crankshaft 32 connected to the pistons via a connecting rod. The crankshaft 32 extends in a vehicle width direction. Reference numeral 31 denotes a crankcase.

As shown in Fig. 2, the crankshaft 32 is connected to the transmission 5 via the clutch 2. The transmission 5 includes a main shaft 33, a drive shaft 23, and a gear selection mechanism 36. The main shaft 33 is connected to the crankshaft 32 via the clutch 2. The main shaft 33 and the drive shaft 23 are arranged in parallel to the crankshaft 32, respectively.

Multiple transmission gears 34 are attached to the main shaft 33. A plurality of transmission gears 35 corresponding to the multiple transmission gears 34 is attached to the drive shaft 23. The plural transmission gears 34 and the plural transmission gears 35 are engaged with one another only based on a one-to-one correspondence. At least either the transmission gears 34 other than the selected transmission gear 34 among the plural transmission gears 34 or the transmission gears 35 other than the selected transmission gear 35 among the plural transmission gears 35 are rotatable about the main shaft 33 or the drain shaft 23. Namely, at least either the unselected transmission gears 34 or the unselected transmission gears 35 run idle about the main shaft 33 or the drive shaft 23. In other words, rotation is transmitted between the main shaft 33 and the drive shaft 23 only via the selected transmission gear 34 and the selected transmission gear 35 engaged with each other.

The gear selection mechanism 36 selects the transmission gears 34 and 35. Specifically, a shift cam 37 of the gear selection mechanism 36 selects the transmission gears 34 and 35. A plurality of cam grooves 37a is formed on an outer peripheral surface of the shift cam 37. A shift fork 38 is attached to each of the cam grooves 37a. The shift fork 38 is engaged with predetermined transmission gears 34 and 35 of the main shaft 33 and the drive shaft 23, respectively. By rotation of the shift cam 37, a plurality of shift forks 38 is guided by the cam grooves 37a and moved in an axial direction of the main shaft 33. The transmission gears 34 and 35 engaged with each other are thereby selected. Specifically, only paired gears according to a rotational angle of the shift cam 37 among the plural transmission gears 34 and 35 are fixed to the main shaft 33 and the drive shaft 23 by a spline. Positions of the transmission gears are thereby decided and the rotation is transmitted between the main shaft 33 and the drive shaft 23 at a predetermined gear ratio via the transmission gears 34 and 35. It is to be noted that this gear selection mechanism 36 is operated by the shift pedal 27 shown in Fig. 1.

With such a configuration, if predetermined paired transmission gears 34 and 35 are fixed to the main shaft 33 and the drive shaft 23, the clutch 2 is engaged and the engine 4 is driven, the power of the engine 4 is transmitted to the main shaft 33 via the clutch 2. Furthermore, rotation is transmitted between the main shaft 33 and the drive shaft 23 at the predetermined transmission gear ratio via the predetermined paired transmission gears 34 and 35, thereby driving the drive shaft 23 to rotate. If the drive shaft 23 is driven to rotate, a transmission mechanism (not shown) such as a chain connecting the drive shaft 23 to the rear wheel 19 transmits a drive force to the rear wheel 19, thereby rotating the rear wheel 19. In the embodiment, the power transmission mechanism connecting the engine 4 to the rear wheel 19 is constituted by the clutch 2, the transmission 5, and the transmission mechanism (not shown) such as a chain.

In the embodiment, the clutch 2 is constituted by a multiple-disc friction clutch. Further, the clutch 2 is a centrifugal clutch automatically disengaged at the time of takeoff and standstill and disengaged by rider's operating the clutch lever 24. A configuration of the clutch 2 will be described in detail.

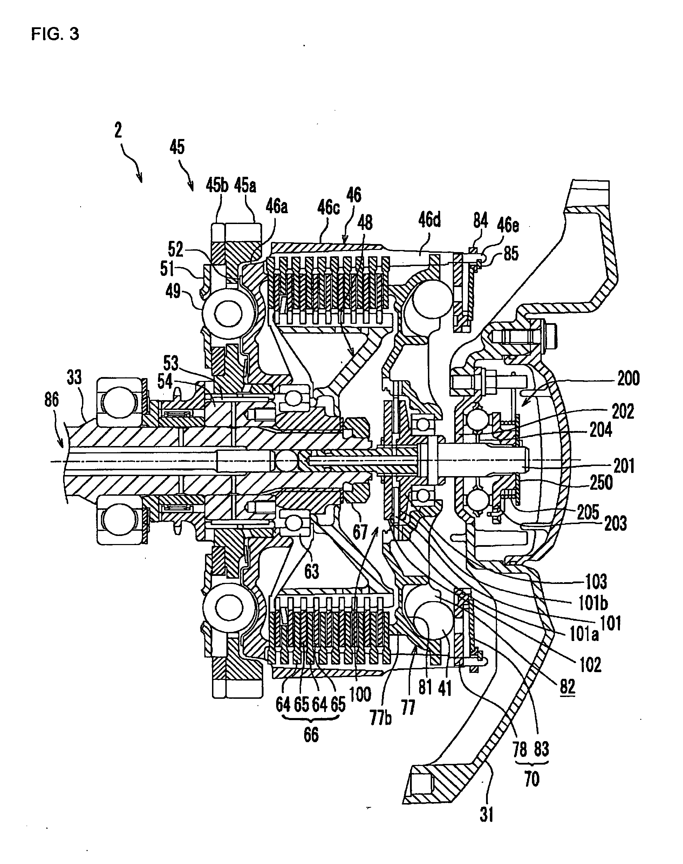

As shown in Fig. 3, the clutch 2 includes a clutch housing 46. The main shaft 33 penetrates through the clutch housing 46. The clutch housing 46 includes a housing main body 46c. The housing main body 46c is formed into a substantially cylindrical shape having one end closed by a bottom 46a. The main shaft 33 is inserted into the bottom 46a of the housing main body 46c. The housing main body 46c includes a plurality of pairs of arms 46d. Each of the arms 46d extends from the bottom 46a toward outside of the vehicle width direction. Further, a circlip groove 46e is provided in each arm 46d on the inner periphery of the arm 46d as described later.

As shown in Fig. 3, the vehicle width direction is the crosswise direction. In the embodiment, since the clutch 2 is arranged on the right side of the main shaft 33, the outside' of the vehicle width direction corresponds to the right side and the inside thereof corresponds to the left side. Therefore, the outside and inside of the vehicle width direction will be simply referred to as "right side and left side", respectively.

A scissors gear 45 is attached to the clutch housing 46. The scissors gear 45 includes two gears 45a and 45b, a spring 49, and two plates 51 and 52. The gears 45a and 45b are located between these two plates 51 and 52. The two plates 51 and 52 are mutually fixed by a fixing tool such as a rivet or a screw with respect to the axial direction of the main shaft 33. The two gears 45a and 45b are thereby substantially fixed to each other with respect to the axial direction of the main shaft 33. With respect to the rotational direction, the two gears 45a and 45b are thereby substantially rotatable about each other.

The gears 45a and 45b are equal in the number of teeth. The gears 45a and 45b are arranged so that the teeth are alternately located in a circumferential direction. The spring 49 is provided between the gears 45a and 45b. Due to this, torsion torque is applied to the gears 45a and 45b by the spring 49. The torsion torque absorbs fluctuation torque of the engine 4.

The gear 45a of the scissors gear 45 is engaged with a gear 32a (see Fig. 2) of the crankshaft 2. The gear 45a of the scissors gear 45 is fixed to the bottom 46a of the clutch housing 46 so as not to be able to relatively rotate. With such a configuration, the gear 45a of the scissors gear 45 and the clutch housing 46 integrally rotate to follow rotation of the crankshaft 32.

A needle bearing 53 and a spacer 54 that is nonrotatably fixed to the main shaft 33 are arranged between the scissors gear 45 and the main shaft 33. The scissors gear 45 is rotatable about the main shaft 33 by this needle bearing 53. Namely, rotation of the scissors gear 45 is intended not to be directly transmitted to the main shaft 33.

A clutch boss 48 is nonrotatably fixed to the main shaft 33 by a nut 67. Namely, the clutch boss 48 rotates along with the main shaft 44. A thrust bearing 63 is arranged between the clutch boss 48 and the scissors gear 45. The scissors gear 45, the needle bearing 53, the spacer 54, and the clutch boss 48 are restricted by the thrust bearing 63 so as not to be close to one another at a predetermined distance or less. Namely, the scissors gear 45, the needle bearing 53, and the spacer 54 are restricted to move to the clutch boss 48 with respect to the axial direction of the main shaft 33.

A plurality of friction plates 64 is arranged inside of the clutch housing 46. Each friction plate 64 is fixed to the clutch housing 46 with respect to the rotational direction of the main shaft 33. Due to this, the plural friction plates 64 rotate along with the clutch housing 46. Each friction plate 64 is displaceable with respect to the axial direction of the main shaft 33. Due to this, a distance between the two adjacent friction plates 64 is variable.

The plural friction plates 64 are arranged in the axial direction of the main shaft 33. A clutch plate 65 is arranged between the two adjacent friction plates 64. The clutch plate 65 is opposed to the adjacent friction plate 64. Each clutch plate 65 is fixed to the clutch boss 48 with respect to the rotational direction of the main shaft 33. Due to this, the plural clutch plates 65 rotate along with the clutch boss 48. Each clutch plate 65 is displaceable with respect to the axial direction of the main shaft 33. Due to this, a distance between the two adjacent clutch plates 65 is variable.

In the embodiment, a plate group 66 is constituted by these plural friction plates 64 and the plural clutch plates 65.

A pressure plate 77 is arranged on the right of the main shaft 33. The pressure plate 77 is formed into a substantially disc shape. A sub-clutch 100, to be described later, is provided in a center-side portion of the pressure plate 77. A radially outward end of the pressure plate 77 is engaged with arms 46d. The pressure plate 77 is thereby nonrotatable about the clutch housing 46 and rotates along with the clutch housing 46.

A pressing portion 77b protruding toward the plate group 66 is formed in a radially outward portion of the pressure plate 77. This pressing portion 77b is opposed to the friction plate 64 located on a rightmost side of the plate group 66. If the pressure plate 77 moves left, this pressing portion 77b presses the plate group 66 leftward. As a result, the friction plates 64 and the clutch plates 65 of the plate group 66 are press-contacted.

Meanwhile, a cam surface 81 supporting a roller weight 41 is formed on an opposite surface to the plate group 66 in the radially outward portion of the pressure plate 77. A plurality of cam surfaces 81 and a plurality of roller weights 41 are provided along the circumferential direction. The plural cam surfaces 81 are arranged radially about an axial center of the main shaft 33. The cam surfaces 81 are inclined so as to be directed to righter side on outer side of the radial direction.

A roller retainer 78 is arranged on the right of the pressure plate 77. The roller retainer 78 is formed into an orbicular zone shape viewed from the axial direction of the main shaft 33. The roller retainer 78 is opposed to the cam surfaces 81 of the pressure plate 77. A space 82 narrower toward outward of the radial direction of the main shaft 33 is thereby formed by each cam surface 81 and the roller retainer 78.

Similarly to the pressure plate 77, a radially outward end of the roller retainer 78 is engaged with the plural arms 46d. The roller retainer 78 is thereby nonrotatable about the clutch housing 46. In other words, the roller retainer 78 rotates along with the clutch housing 46. In the axial direction of the main shaft 33, the roller retainer 78 is displaceable with respect to the clutch housing 46.

The roller retainer 78 supports an inner side end 83b of a disc spring. Due to this, the roller retainer 78 is urged leftward by a disc spring 83. In other words, the roller retainer 78 is urged toward the plate group 66 by the disc spring 83. The roller retainer 78 and the disc spring 83 constitute an abutment member 70 abutting one roller weight 41 on one of the cam surfaces 81.

The roller weights 41 are arranged in a plurality of spaces 82, respectively. Each roller weight 41 revolves to follow rotation of the clutch housing 46 and moves on one cam surface 81 toward radially outward by a centrifugal force generated during the revolution. The roller weight 41 receives a reaction force from the abutment member 70 and presses the pressure plate 77 toward the plate group 66.

If a rotational speed of the crankshaft 32 is low, a rotational speed of the clutch housing 46 becomes low accordingly. Due to this, the centrifugal force acting on each roller weight 41 is relatively low and the roller weight 41 is located relatively inward. A force by which the roller weight 41 presses the pressure plate 77 leftward thereby weakens. As a result, the degree of pressure-contact of the plate group 66 weakens and torque transmittable from the clutch housing 46 to the clutch boss 48 becomes relatively low.

On the other hand, if the rotational speed of the crankshaft 32 is relatively high, the rotational speed of the clutch housing 46 becomes relatively high accordingly. Due to this, as the rotational speed of the clutch housing 46 is larger, the centrifugal force acting on each roller weight 41 becomes stronger. If the centrifugal force acting on the roller weight 41 is equal to or greater than a predetermined value, the roller weight 41 moves outward. The pressure plate 77 is thereby pressed leftward by the roller weight 41 and moved toward the plate group 66. As a result, the plate group 66 is pressure-contacted relatively strongly and the torque transmittable from the clutch housing 46 to the clutch boss 48 becomes relatively high.

As shown in Fig. 3, the clutch 2 according to the embodiment includes a sub clutch 100. The sub clutch 100 includes a friction plate 101, a first pressing plate 102 opposed to a left surface (hereinafter, "first friction surface") 101a of the friction plate 101, and a second pressing plate 102 opposed to a right surface (hereinafter, "second friction surface") 101b of the friction plate 101.

The clutch 2 according to the embodiment includes a clutch release mechanism 86. The clutch release mechanism 86 forcibly releases a pressure-contact state of the plate group 66 in response to rider's operation of the clutch lever 24. This clutch release mechanism 86 enables the clutch 2 to be disengaged by a manual operation of the rider of the motorcycle 1.

As shown in Fig. 3, the clutch 2 according to the embodiment includes a toggle mechanism 200. The toggle mechanism 200 converts a part of the torque of the pressure plate 77 into a force disengaging the clutch 2 so as to reduce a force required to disengage the clutch 2. The toggle mechanism 200 according to the embodiment is constituted by a so-called ball cam. The toggle mechanism 200 includes a slide shaft 201 fixed to the second pressing plate 103, a first cam plate 202, a second cam plate 203, a ball plate 204, and a coil spring 205 urging the second cam plate 203 in a direction in which the second cam plate 203 separates from the first cam plate 202. A support plate 250 supporting the coil spring 205 by abutting on a right portion of the coil spring 205 is fixed onto a tip end side of the slide shaft 201. It is to be noted that the toggle mechanism 200 is not limited to the ball cam structure and may be any structure as long as the mechanism is configured to reduce the force required to disengage the clutch 2.

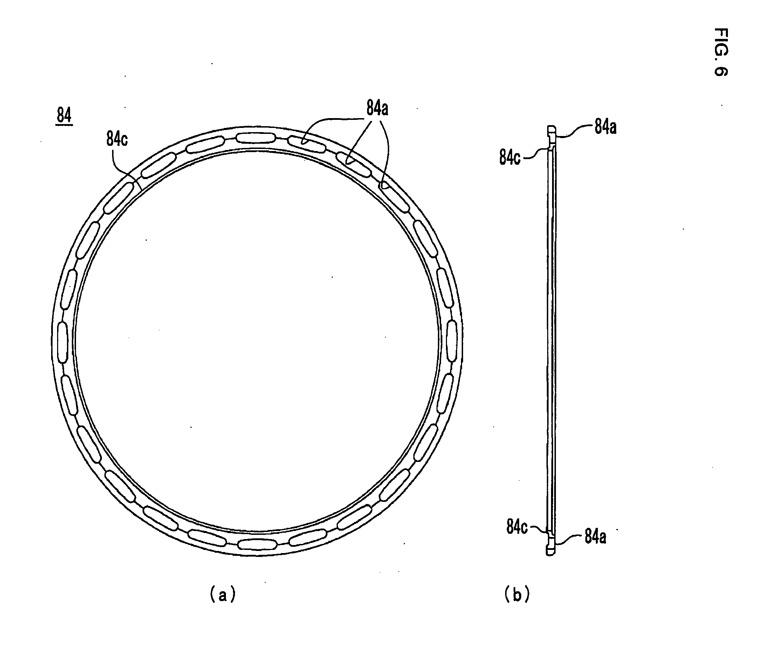

A retainer 84 is arranged on a right end of the housing main body 46c. As shown in Fig. 6, the retainer 84 is shaped to be fitted into an outer hull of the housing main body 46c. The clutch housing 46 is cylindrical. Due to this, the retainer 84 is circular. The retainer 84 includes mount holes 84a and the arms 46d (see Figs. 3. and 4) of the housing main body 46c are fitted into the mount holes 84a.

A stopper 84c is provided on the retainer 84 along an inner circumference of a circular portion of the retainer 84. The stopper 84c is shaped so that the inner circumference of the circular portion of the retainer 84 is bent in a front surface direction of Fig. 6(a) (right direction in Fig. 6(b)).

Fig. 5(a) is a front view of a circlip 85 according to an embodiment. The circlip 85 has a circular shape so as to lock the retainer 84 in the housing main body 46c. The circlip 85 includes a slit unit 85b in a part of the circular portion.

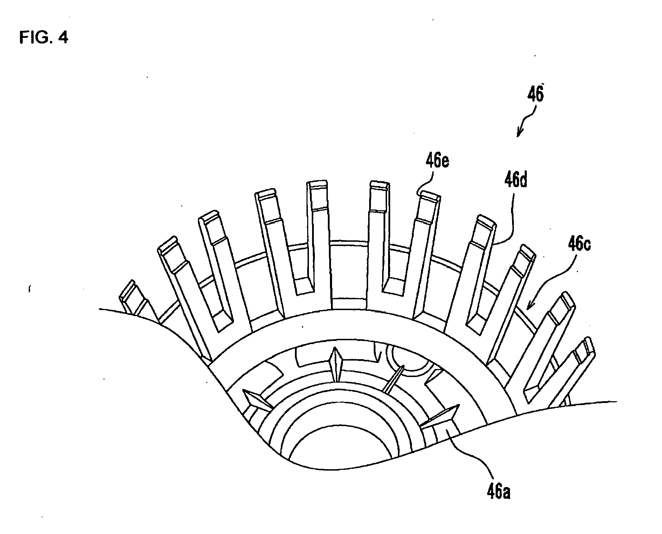

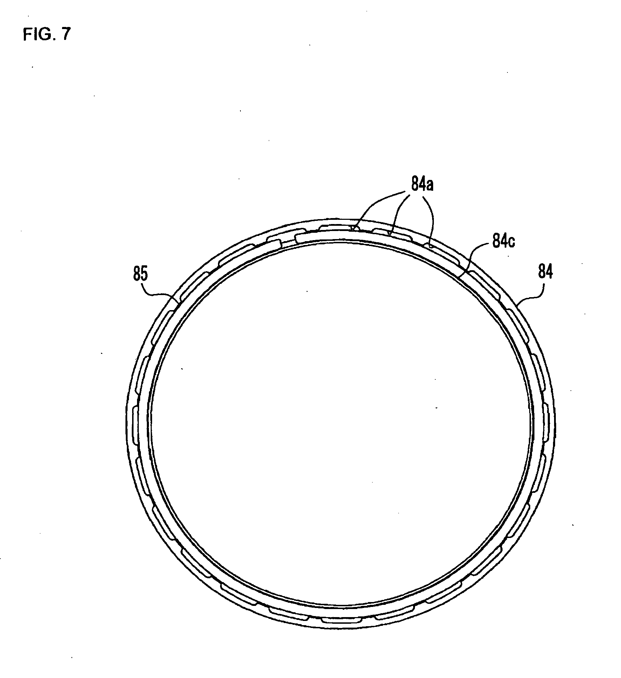

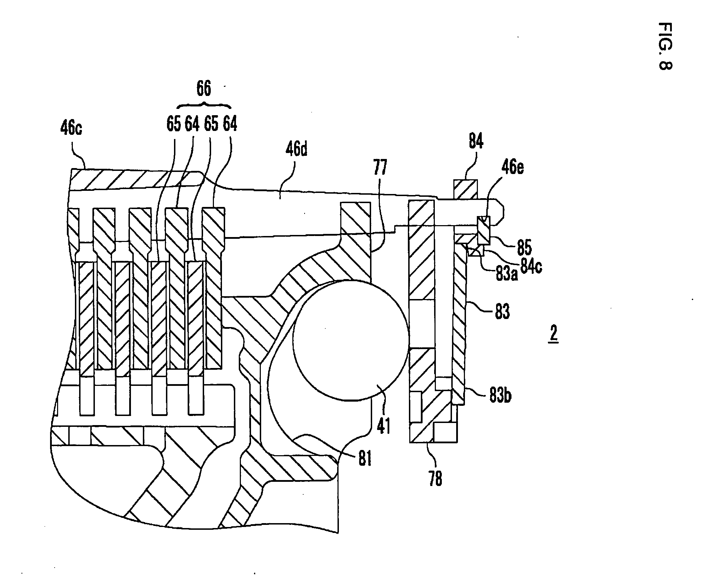

As shown in Figs. 7 and 8, the retainer 84 is locked to the arms 46d by the circlip 85. A circlip groove 46e into which an outer circumference of the circlip 85 is fitted is provided in each arm 46d on the inner periphery of the housing main body 46c (see Fig. 4). The retainer 84 is locked to the arms 46d and supports an outer side end 83a of the disc spring 83. The roller retainer 78 supports the inner side end 83b of the disc spring 83 as stated above. A reaction force of the disc spring 83 against each roller weight 41 is always applied to the retainer 84 from left to right in Fig. 8. The circlip 85 is fitted into the circlip groove 46e so as not to detach the retainer 84 from the housing main body 46c by this reaction force. Further, by fitting the circlip 85 into the circlip groove 46e, the circlip 85 restricts positions of at least the pressure plate 77 and the roller weight 41 among constituent elements of the clutch 2 in the axial direction of the main shaft 33 (see Fig. 3). Due to this, it is possible to ensure that the pressure plate 77 receives the centrifugal force of each roller weight 41 generated by rotation of the main shaft 33.

Moreover, as shown in Figs. 7 and 8, the circlip 85 is suppressed from deforming radially inward by the stopper 84c provided on the retainer 84. A height of the stopper 84c at this time (in the crosswise direction in Fig. 6(b)) is not limited to a specific height and may be set to a height capable of suppressing radially inward deformation of the circlip 85 during actuation of the power unit 3 and preventing detachment of the circlip 85.

By way of example, the circlip 85 locks the retainer 84 and is fitted into the housing main body 46c in the following order. In the clutch 2 shown in Fig. 3, in a state in which a region surrounded by the clutch housing 46 is incorporated (a state in which the clutch cover 31 is detached and in which the toggle mechanism 200 is not mounted in Fig. 3), the arms 46d of the clutch housing 46 are inserted into the mount holes 84a of the retainer 84. After inserting the retainer 84 into the arms 46d, the slide shaft 201 is rotated in a predetermined direction by a tool such as a driver to allow the pressure plate 77 to press the plate group 66. By forcibly applying the pressing force against the plate group 66 to the pressure plate 77 from outside of the clutch 2, the reaction force of the disc spring 83 against each roller weight 41 is eliminated from the retainer 84.

After allowing the pressure plate 77 to press the plate group 66, a diameter of a circle of the circlip 85 is reduced to be smaller than a diameter of a bottom of the circlip groove 46e. The diameter of the circle of the circlip 85 is reduced by applying a force to the circlip 85 from an outer circular arc of the circle of the circlip 85 so as to contact left and right portions of the circlip 85 separated from each other by the slit unit 85b as shown in Fig. 5 in the slit unit 85b. The reduced circlip 85 is fitted into the circlip groove 46e.

An outer circumference of the circlip 85 is fitted into the circlip groove 46e. Further, even if the diameter of the circle is reduced during actuation of the power unit 3, the inner circular arc of the circular portion of the circlip 85 contacts with the slit unit 85b by the stopper 84c. Due to this, reduction in the diameter of the circle of the circlip 85 is restricted. In other words, the diameter of the circle of the circlip 85 is hardly reduced during actuation of the power unit 3. It is, therefore, possible to prevent detachment of the circlip 85 from the arms 46d by providing the stopper 84c on the retainer 84.

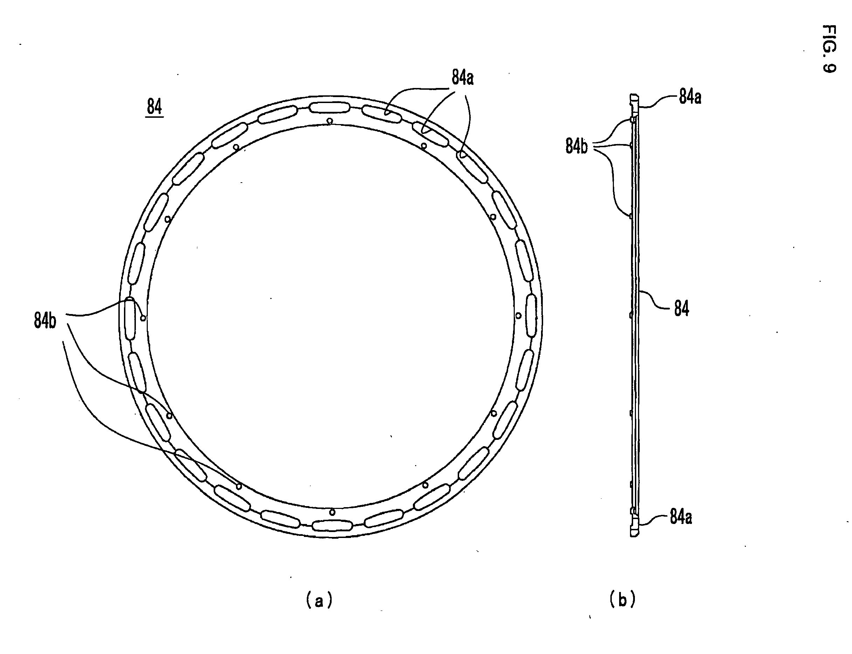

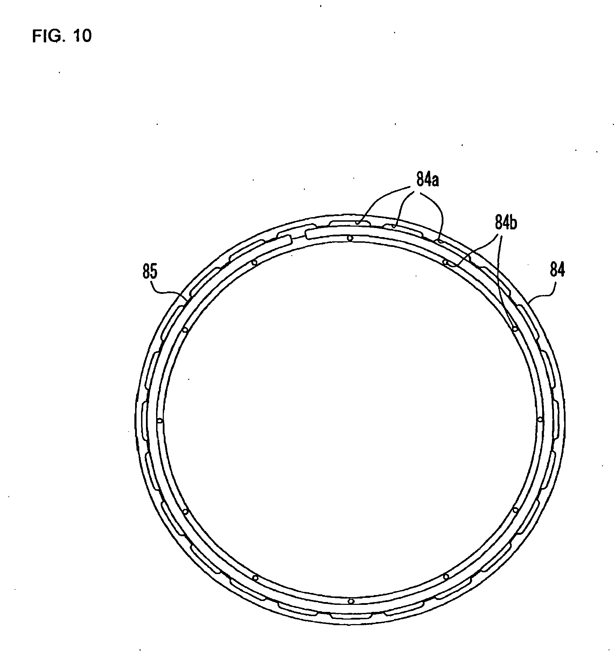

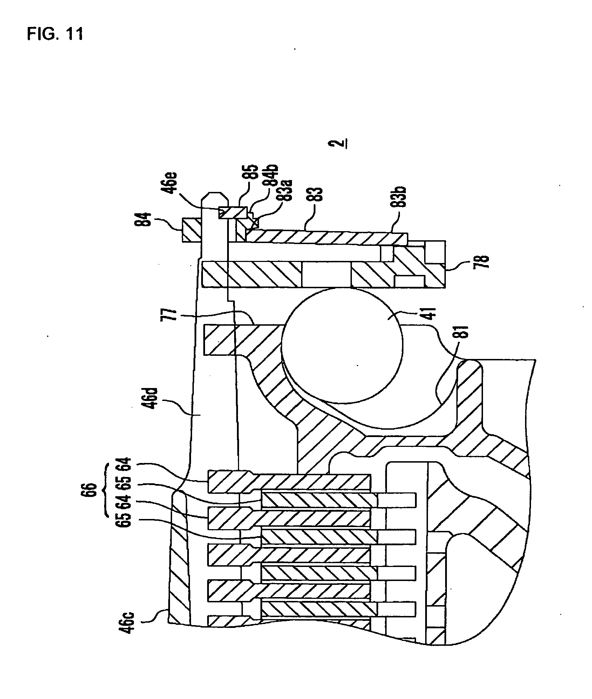

Fig. 5(a) is a front view of a circlip 85 according to a first modification. Further, as shown in Fig. 9, pin stoppers 84b are provided on a circular portion of a retainer 84 according to the first modification. The stoppers 84b are ribs formed on a surface of the retainer 84. As shown in Figs. 10 and 11, the retainer 84 is locked to the arms 46d by the circlip 85. The circlip 85 is suppressed from deforming radially inward by the stoppers 84b provided on the retainer 84. The number of the stoppers 84b and arrangement intervals thereof at this time are not limited specifically. Further, a height of each of the stoppers 84b at this time (in the crosswise direction in Fig. 9(b)) is not limited to a specific height and may be set to a height capable of suppressing radially inward deformation of the circlip 85 and preventing detachment of the circlip 85 during actuation of a power unit 3.

It is to be noted that a manner of forming the stoppers 84b is not limited to forming of ribs on the surface of the retainer 84. For example, commonly used screws are screwed into screw holes (not shown) provided in the retainer 84 and heads of the screws remaining on the surface of the retainer 84 can be used as the stoppers, respectively.

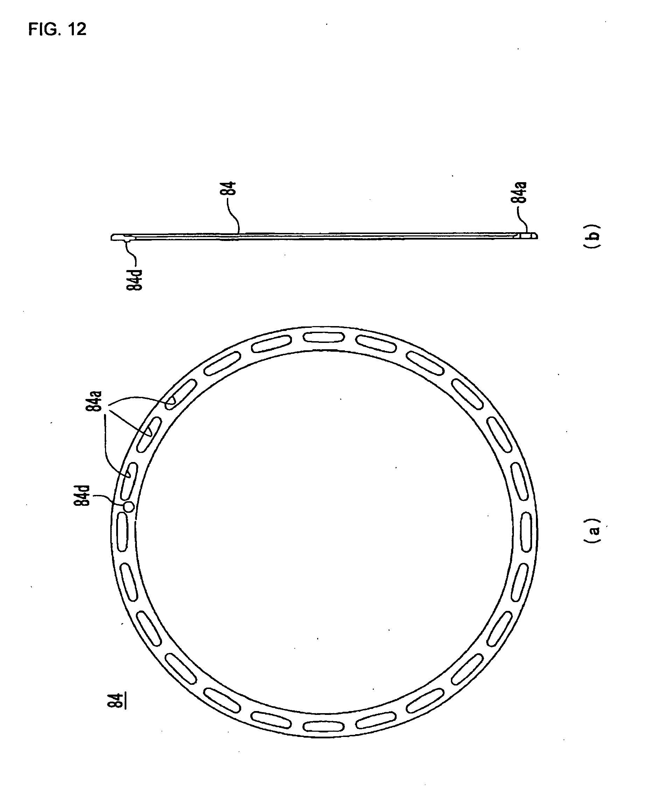

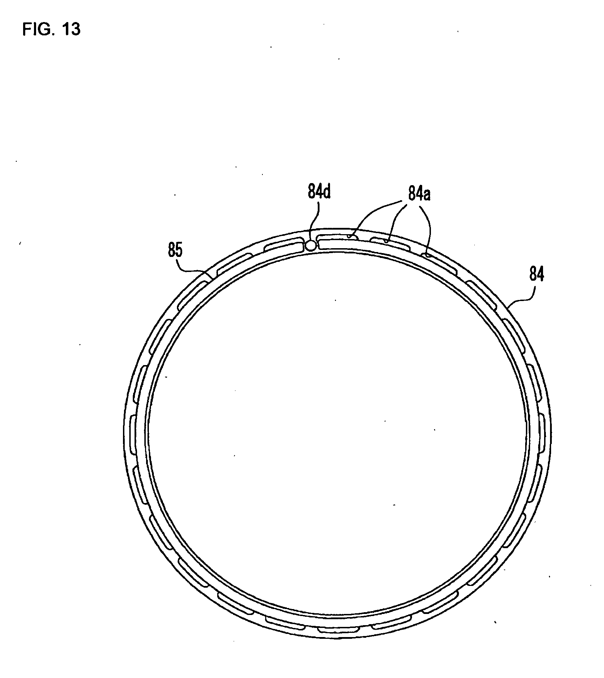

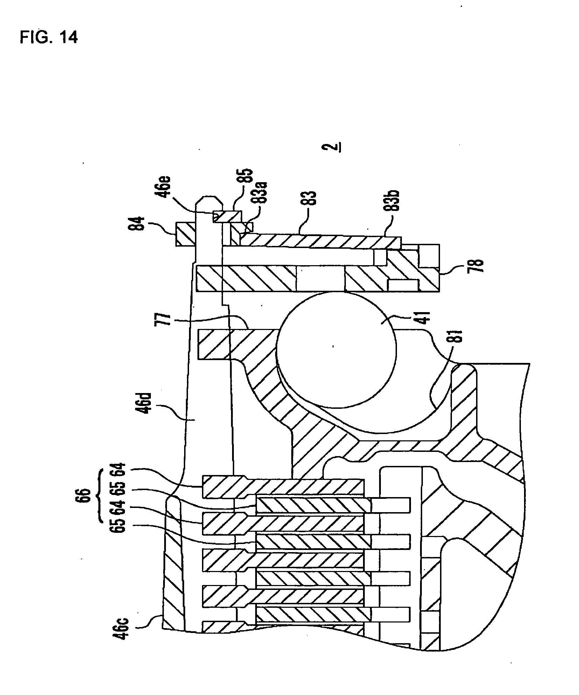

Fig. 5(a) is a front view of a circlip 85 according to an embodiment. The circlip 85 used in the embodiment is similar to the circlip 85 used in the first modification. Further, as shown in Fig. 12, a stopper 84d is provided in one portion of a circular portion of a retainer 84. The stopper 84d is a rib formed on a surface of the retainer 84. As shown in Figs. 13 and 14, the retainer 84 is locked to arms 46d by the circlip 85. The circlip 85 is suppressed from deforming radially inward by the stopper 84d provided on the retainer 84 and a housing main body 46. A position of the stopper 84d at this time is not limited to a specific position on the circular portion of the retainer 84. The position of the stopper 84d may be set to a position capable of suppressing radially inward deformation of the circlip 85 and preventing detachment of the circlip 85 during actuation of a power unit 3.

It is to be noted that a manner of forming the stopper 84d is not limited to forming of the rib on the surface of the retainer 84. For example, a commonly used bolt is screwed into a bolt hole (not shown) provided in one portion of the circular portion of the retainer 84 and a head of the bolt remaining on the surface of the retainer 84 can be used as the stopper.

As stated so far, the clutch 2 according to the embodiment can suppress the radially inward deformation of the circlip 85 during driving of the engine 4. By suppressing the radially inward deformation of the circlip 85, detachment of the circlip 85 from the clutch housing 46 can be prevented.

The clutch 2 according to the embodiment includes the stopper suppressing the radially inward deformation of the circlip 85. The stopper suppressing the radially inward deformation of the circlip 85 is the stopper 84b, each of the stoppers 84c or the stopper 84d provided on the surface of the retainer 84. The circlip 85 is suppressed from deforming radially inward by the stopper during driving of the engine 4. It is, therefore, possible to prevent detachment of the circlip 85 from the clutch housing 46. Furthermore, if one of the stopper 84b, each stopper 84c, and the stopper 84d is provided on the surface of the retainer 84 as a part of the retainer 84, the position of the circlip 85 in the housing main body 46c can be held and the circlip 85 can be prevented from detaching from the arms 46d without increasing the number of components related to the clutch 2.

The clutch 2 according to the embodiment is a centrifugal friction clutch. The clutch 2 includes the centrifugal weights 41 and the roller retainer 78. Each of the centrifugal weights 41 receives a centrifugal force by rotation of the main shaft 33 and moves toward the centrifugal direction from the axial center of the main shaft 33. Each of the cam surfaces 81, which are provided on the pressure plate 77, restricts movement of one of the centrifugal weights 41 in the centrifugal direction and converts the centrifugal force into the force in the axial direction of the main shaft 33. The roller retainer 78 stops movement of the centrifugal weight 41 in the axial direction and supports the inner side end 83b of the disc spring 83. Further, the retainer 84 supports the outer side end 83a of the disc spring 83. By supporting the outer side end 83a of the disc spring 83, the retainer 84 receives the reaction force of the disc spring 83. Due to this, in the centrifugal friction clutch 2 according to the embodiment, the reaction force of the disc spring 83 loaded onto the retainer 84 is great, as compared with a non-centrifugal friction clutch. Moreover, the circlip 85 locks the retainer 84 by being fitted into the housing main body 46c. Therefore, the clutch 2 according to the embodiment exhibits a greater advantage of preventing the detachment of the circlip 85 than that of the non-centrifugal friction clutch.

The clutch 2 according to the embodiment is a multiple-disc friction clutch. The clutch 2 includes a plurality of friction plates 64 in the clutch housing 46 and includes a plurality of clutch plates 65 in the clutch boss 48. The plural friction plates 64 and the plural clutch plates 65 are alternately arranged in a predetermined direction. Further, the pressure plate 77 contacts the friction plates 64 with the clutch plates 65 by moving in the predetermined direction. The disc spring 83 applies a force assisting in the contact between the friction plates 64 and the clutch plates 65. The retainer 84 receives the reaction force of the disc spring 83 by supporting the outer side end 83a of the disc spring 83. The disc spring 83 needs a greater urge force than that in a friction clutch that is not the multiple-disc type by a plurality of pairs of friction plates 64 and clutch plates 65. Due to this, in the multiple-disc friction clutch according to the embodiment, the reaction force of the disc spring 83 loaded onto the retainer 84 is greater than that in the friction clutch that is not the multiple-disc type. Further, the circlip 85 locks the retainer 84 by being fitted into the housing main body 46c. Therefore, the clutch 2 according to the embodiment exhibits a greater advantage of preventing detachment of the circlip 85 than that of the friction clutch that is not the multiple-disc type.

The clutch 2 according to the embodiment includes the toggle mechanism 200. By including the toggle mechanism 200 in a large-capacity clutch such as the clutch 2, it is possible to facilitate disengaging the clutch 2 by the clutch lever 24. Namely, as compared with a clutch that does not include the toggle mechanism 200, a force required to disengage the clutch can be reduced. In other words, the toggle mechanism 200 is provided in the clutch so as to reduce the force required to manipulate the large-capacity clutch. In the clutch 2 according to the embodiment, the diameter of each of the plates, for example, the friction plates 64 and the clutch plates 65 related to disengagement of the clutch 2 is larger than that of each of plates in a small-capacity clutch. Accordingly, the diameter of the clutch housing 46 covering up the friction plates 64 and the clutch plates 65 is larger than that in the small-capacity clutch. Moreover, the disc spring 83 applies the force assisting in the contact between the friction plates 64 and the clutch plates 65. Due to this, the disc spring 83 needs a greater urge force than that in the small-capacity clutch. The retainer 84 receives the reaction force of the disc spring 83 by supporting the outer side end 83a of the disc spring 83. The circlip 85 locks the retainer 84 by being fitted into the arms 46d of the housing main body 46c. In the large-diameter clutch, the diameter of the circle of the circlip 85 is large as compared with the small-diameter clutch. Due to this, during actuation of the power unit 3, a greater centrifugal force is generated on the entire circlip 85 than that in the small-capacity clutch. If a relatively great centrifugal force is generated on the entire circlip 85, a greater frictional force is generated between the outer circumferential side of the circle of the circlip 85 and the inner hull of the housing main body 46c. If such a relatively great frictional force is dropped instantaneously, the probability of deforming the circular portion of the circlip 85 increases. If the circlip 85 deforms, the circlip 85 may possibly detach from the housing main body 45c. Therefore, the clutch 2 according to the embodiment exhibits the greater advantage of preventing the detachment of the circlip 85 than that of the small-capacity clutch 2.

The clutch 2 according to the embodiment can be used in a vehicle. The vehicle including the clutch 2 can run stably in various running conditions because the detachment of the circlip 85 is prevented.

Moreover, the clutch 2 according to the embodiment can be used in a motorcycle. The motorcycle often requires complicated throttle operation as compared with the other types of vehicles. Further, during running, the engine 4 is driven at higher engine speed than that of the engine of the other types of vehicles. Due to this, the main shaft 33 of the clutch 2 is driven at a higher rotational speed. A greater centrifugal force is generated on the circlip 85 fitted into the clutch housing 46 by driving at the higher engine speed. If a relatively great centrifugal force is generated on the entire circlip 85, a greater frictional force is generated between the outer circumferential side of the circle of the circlip 85 and the inner hull of the housing main body 46c. If such a relatively great frictional force is dropped instantaneously, the probability of deforming the circular portion of the circlip 85 increases. If the circlip 85 deforms, the circlip 85 may possibly detach from the housing main body 46c. Therefore, the clutch 2 according to the embodiment exhibits the greater advantage of preventing the detachment of the circlip 85 by being included in the motorcycle 1.

In the previous embodiment, the stopper is provided on the retainer 84 as means for suppressing the radially inward deformation of the circlip 85. However, the means for suppressing the radially inward deformation of the circlip 85 is not necessarily limited to a structure provided on the retainer 84. For example, as shown below, the circlip 85 may be structured per se to suppress the radially inward deformation of the circlip 85.

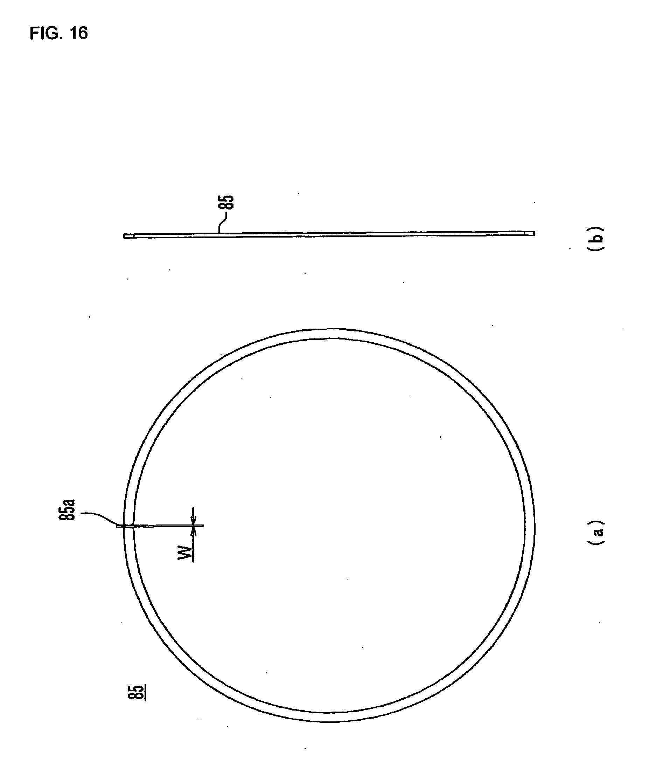

As shown in Fig. 16, a circlip 85 is circular so as to lock a retainer 84 to a housing main body 46c. A slit 85a is provided in one certain portion on a circular portion of the circlip 85. A shape and an angle of the slit 85a are not limited specifically as long as the circular portion of the circlip 85 is broken in one portion. In Fig. 16, the slit 85a is formed at right angle toward a center of a circle from one portion on an outer circular arc of the circle. A width W of the slit 85a shown in Fig. 16 is smaller than a difference in radius between an outer circle and an inner circle of the circlip 85. In other words, the width W satisfies T < (D1-D2)/2 while a diameter of the outer circle of the circlip 85 is assumed as D1 and that of the inner circle thereof is assumed as D2.

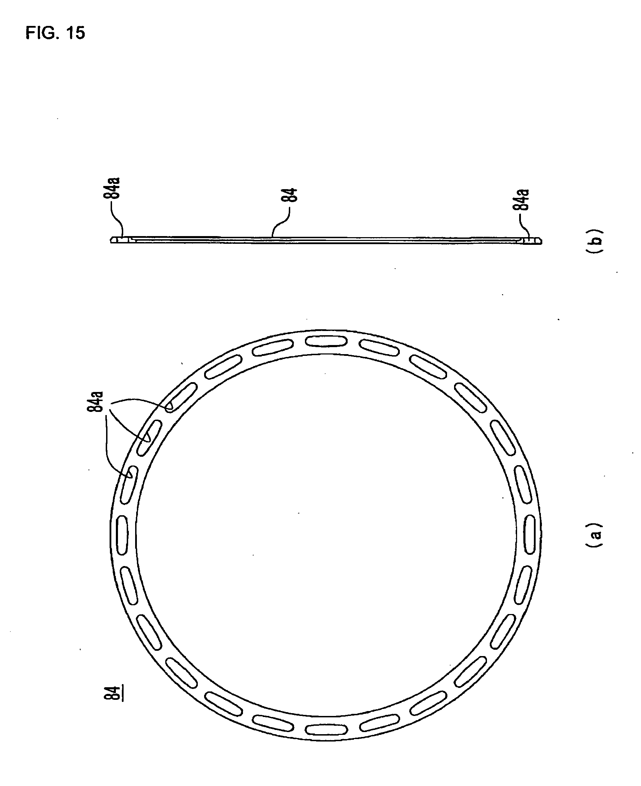

As shown in Fig. 15, the retainer 84 has such a shape as to be fitted into an outer hull of the housing main body 46c. In this comparative example, a clutch housing 46 has a cylindrical shape. Due to this, the retainer 84 has a circular shape. Mount holes 84a are formed in the retainer 84 and arms 46d (see Figs. 3 and 4) of the housing main body 46c are fitted into the mount holes 84a.

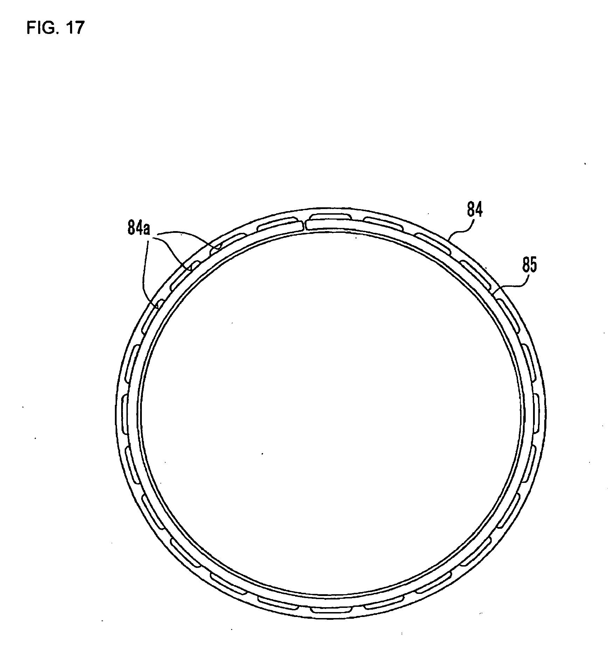

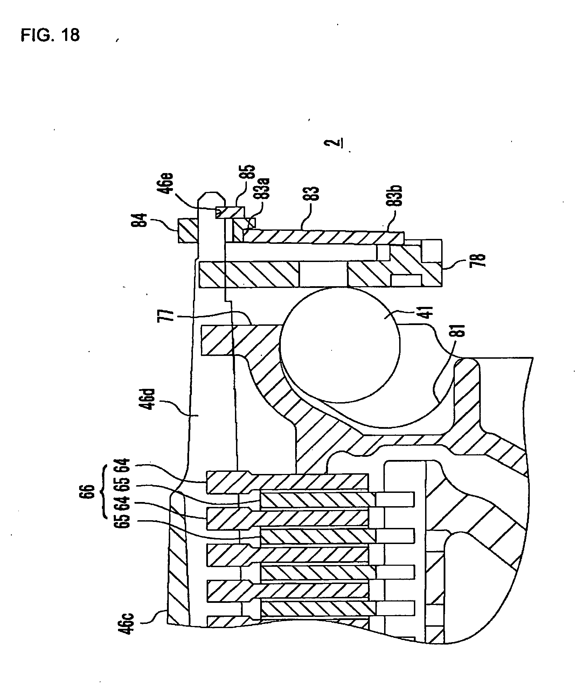

As shown in Figs. 17 and 18, the retainer 84 is locked to the arm 46d by the circlip 85. A circlip groove 46e into which an outer circumference of the circlip 85 is fitted is provided in each of the arms 46d on an inner periphery of the housing main body 46c (see Fig. 4). The retainer 84 is locked to the arms 46d and supports an outer side end 83a of a disc spring 83. A roller retainer 78 supports an inner side end of the disc spring 83 as stated above. A reaction force of the disc spring 83 against each roller weight 41 is always applied to the retainer 84 from left to right in Fig. 8. The circlip 85 is fitted into the circlip groove 46e so as not to detach the retainer 84 from the housing main body 46c by this reaction force. Further, by fitting the circlip 85 into the circlip groove 46e, the circlip 85 restricts positions of at least a pressure plate 77 and the roller weight 41 among constituent elements of the clutch 2 in an axial direction of a main shaft 33 (see Fig. 3). Due to this, it is possible to ensure that the pressure plate 77 receives a centrifugal force of each roller weight 41 generated by rotation of the main shaft 33.

By way of example, the circlip 85 locks the retainer 84 and is fitted into the housing main body 46c in the following order. In the clutch 2 shown in Fig. 3, in a state in which a region surrounded by the clutch housing 46 is incorporated (a state in which the clutch cover 31 is detached and in which the toggle mechanism 200 is not mounted in Fig. 3), the arms 46d of the clutch housing 46 are inserted into the mount holes 84a of the retainer 84. After inserting the retainer 84 into the arms 46d, a slide shaft 201 is rotated in a predetermined direction by a tool such as a driver to allow the pressure plate 77 to press the plate group 66. By forcibly applying a pressing force against the plate group 66 to the pressure plate 77 from outside of the clutch 2, the reaction force of the disc spring 83 against each roller weight 41 is eliminated from the retainer 84.

After allowing the pressure plate 77 to press the plate group 66, a diameter of the circle of the circlip 85 is reduced to be smaller than a diameter of a bottom of the circlip groove 46e. The diameter of the circle of the circlip 85 is reduced by applying a force to the circlip 85 from an outer circular arc of the circle of the circlip 85 so as to cross left and right portions of the circlip 85 separated by the slit 85a as shown in Fig. 16 with each other from the slit 85a. The reduced circlip 85 is fitted into the circlip groove 46e. In the circlip 85 having the reduced diameter of the circle, the crossing portions overlap each other on front and rear surfaces of a sheet of Fig. 16 (crosswise in Figs. 3 and 4). A portion in which the left and right of the circlip 85 overlap each other has a thickness twice or more as large as that of other portions of the circlip 85. Due to this, one of the circlip grooves 46e has a width twice or more as large as that of the other circlip grooves 46e in one of the portions and regions of a plurality of arms 46d so that the portion in which the left and right of the circlip 85 overlap each other can be fitted into the housing main body 46c. The portion and region in which the twice or more width is set are not limited to a specific one of the arms 46d as long as the circlip 85 does not detach during actuation of a power unit 3.

Even if the diameter of the circle of the circlip 85 is to be reduced during actuation of the power unit 3, the left and right portions of the circlip 85 can contact each other in a cross section of the slit 85a by the slit 85a. Namely, even if the diameter of the circle of the circlip 85 is to be reduced, the diameter is hardly reduced during actuation of the power unit 3 since both side portions of the circlip 85 across the slit 85a abut on each other. Therefore, it is possible to prevent detachment of the circlip 85 from the arms 46d by providing the slit 85a in the circlip 85.

The clutch 2 according to the second comparative example is configured to suppress the radially inward deformation of the circlip 85. Examples of a configuration for suppressing the radially inward deformation of the circlip 85 include the slit 85a formed by working the circlip 85. By providing the slit 85a, the left and right portions of the circlip 85 can contact each other in the cross section of the slit 85a even if the diameter of the circle of the circlip 85 is to be reduced while an engine 4 is being driven. Namely, even if the diameter of the circle of the circlip 85 is to be reduced, both side portions of the slit 85a abut on each other. Due to this, the diameter of the circle of the circlip 85 is hardly reduced during actuation of the power unit 3. It is, therefore, possible to prevent detachment of the circlip 85 from the clutch housing 46.

The present invention is effective for a friction clutch.

### Description of Reference Symbols

- 1 :: Motorcycle
- 2 :: Clutch (friction clutch)
- 3 :: Engine
- 19 :: Rear wheel (driving wheel)
- 24 :: Clutch lever (clutch manipulating element)
- 33 :: Main shaft
- 41 :: Roller weight (centrifugal weight)
- 46 :: Clutch housing
- 48 :: Clutch boss
- 64 :: Friction plate (first plate)
- 65 :: Clutch plate (second plate)
- 66 :: plate group
- 77 :: Pressure plate
- 78 :: Roller retainer (seat)
- 81 :: Cam surface
- 83 :: Disc spring (clutch spring)
- 84 :: Retainer
- 84a :: Mount hole
- 84b :: Stopper
- 84c :: Stopper
- 84d :: Stopper
- 85 :: Circlip (retaining ring)
- 85a :: Slit
- 85b :: Slit unit
- 100 :: Sub clutch
- 200 :: Toggle mechanism

## Claims

1. A friction clutch (2) operable to transmit a drive force of an engine (4), comprising:
a main shaft (33) arranged to be driven to rotate by the engine;
a clutch housing (46) including a first plate (64), and arranged to rotate along the main shaft (33);
a clutch boss (48) including a second plate (65) opposed to the first plate (64) in a predetermined direction;
a pressure plate (77) arranged to rotate according to the main shaft (33), and to cause the first plate (64) and the second plate (65) to contact each other by moving in the predetermined direction;
a clutch spring (83) arranged on an opposite side of the pressure plate (77) to the first and second plates (64, 65) in the predetermined direction, and arranged to apply a force in a direction of causing the first plate (64) and the second plate (65) to contact each other to the pressure plate (77);
a retainer (84) formed into a substantially circular shape, and arranged to receive a reaction force of the clutch spring (83) by supporting one end of the clutch spring (83) opposite to the pressure plate (77);
a retaining ring (85) having a substantially circular shape, having a slit (85a, 85b) extending in a radial direction and formed in a circumferential part of the retaining ring (85), arranged to fit into an inner peripheral side of the clutch housing (46), to lock the retainer (84) to the clutch housing (46) by abutting on an opposite side of the retainer (84) to the clutch spring (83), wherein the retaining ring (85) is configured to be suppressed from deforming radially inward; **characterised in that**
a stopper (84d) is arranged to suppress the retaining ring (85) from deforming radially inward, wherein the stopper (84d) is a member interposing between left and right ends of the retaining ring (85) across the slit (85a, 85b), and wherein the stopper (84b, 84c, 84d) is a part of the retainer (84).

2. The friction clutch (2) according to claim 1, further comprising:
a centrifugal weight (41) arranged on the opposite side of the pressure plate (77) to the first and second plate (65), arranged to receive a centrifugal force by rotating around the main shaft (33), and to move toward a centrifugal direction; and
a seat (78) locked to the clutch housing (46), arranged to restrict movement of the centrifugal weight (41) in an axial direction of the main shaft (33), and to support one end of the clutch spring (83) on the pressure plate side,
wherein a cam surface (81) contacting with the centrifugal weight (41) and arranged to convert the centrifugal force into a force in the axial direction of the main shaft (33) is formed on the opposite side of the pressure plate (77) to the first and second plates (64, 65).

3. The friction clutch (2) according to any preceding claim, comprising a plurality of the first plates (64) and a plurality of the second plates (65),
wherein the plurality of first plates (64) and the plurality of second plates (65) are alternately arranged along the predetermined direction.

4. The friction clutch (2) according to any preceding claim, comprising a toggle mechanism (200) arranged to receive a torque of the pressure plate (77) and to convert the torque into a force for moving the pressure plate (77) in a direction of separating the first plate (64) from the second plate (65) during a clutch disengagement by a clutch manipulating element (24) disengaging the friction clutch (2).

5. A vehicle (1) comprising:
the friction clutch (2) according to any preceding claim;
an engine (4); and
a driving wheel (19),
wherein the friction clutch (2) disengageably transmits a drive force from the engine (4) toward the driving wheel (19).

6. The vehicle according to claim 5, which is a motorcycle.

## Patentansprüche

1. Eine Reibungskupplung (2), die wirksam ist, um eine Antriebskraft eines Motors (4) zu übertragen, die folgende Merkmale aufweist:
eine Hauptwelle (33), die angeordnet ist, um durch den Motor zur Drehung angetrieben zu werden;
ein Kupplungsgehäuse (46), das eine erste Platte (64) umfasst und angeordnet ist, um sich entlang der Hauptwelle (33) zu drehen;
eine Kupplungsnabe (48), die eine zweite Platte (65) umfasst, die der ersten Platte (64) in einer vorbestimmten Richtung gegenüberliegt;
eine Druckplatte (77), die angeordnet ist, um sich entsprechend der Hauptwelle (33) zu drehen und durch Bewegen in der vorbestimmten Richtung zu bewirken, dass die erste Platte (64) und die zweite Platte (65) einander berühren;
eine Kupplungsfeder (83), die auf einer gegenüberliegenden Seite der Druckplatte (77) zu der ersten und der zweiten Platte (64, 65) in der vorbestimmten Richtung angeordnet und angeordnet ist, um eine Kraft in einer Richtung eines Bewirkens, dass die erste Platte (64) und die zweite Platte (65) einander berühren, auf die Druckplatte (77) auszuüben;
eine Haltevorrichtung (84), die in eine im Wesentlichen kreisförmige Form gebildet und angeordnet ist, um durch Tragen eines Endes der Kupplungsfeder (83), das der Druckplatte (77) gegenüberliegt, eine Reaktionskraft der Kupplungsfeder (83) aufzunehmen;
einen Haltering (85) mit einer im Wesentlichen kreisförmigen Form, der einen Schlitz (85a, 85b) aufweist, der sich in einer Radialrichtung erstreckt und in einem Umfangsteil des Halterings (85) gebildet ist, angeordnet, um in eine Innenperipherieseite des Kupplungsgehäuses (46) zu passen, um die Haltevorrichtung (84) durch Anstoßen an eine gegenüberliegende Seite der Haltevorrichtung (84) zu der Kupplungsfeder (83) mit dem Kupplungsgehäuse (46) zu verriegeln, wobei der Haltering (85) so ausgebildet ist, dass ein radiales Verformen desselben nach innen unterdrückt wird; **dadurch gekennzeichnet, dass**:
eine Anschlagvorrichtung (84b) angeordnet ist, um zu unterdrücken, dass sich der Haltering (85) radial nach innen verformt, wobei die Anschlagvorrichtung (84b) ein Bauteil ist, das zwischen einem linken und einem rechten Ende des Halterings (85) über den Schlitz (85a, 85b) hinweg angeordnet ist, und wobei die Anschlagvorrichtung (84b, 84c, 84d) Teil der Haltevorrichtung (84) ist.

2. Die Reibungskopplung (2) gemäß Anspruch 1, die ferner folgende Merkmale aufweist:
ein Fliehgewicht (41), das auf der gegenüberliegenden Seite der Pressplatte (77) zu der ersten und der zweiten Platte (65) angeordnet ist, angeordnet, um eine Zentrifugalkraft durch Drehen um die Hauptwelle (33) aufzunehmen und sich in Richtung einer Zentrifugalrichtung zu bewegen; und
eine Auflage (78), die mit dem Kupplungsgehäuse (46) verriegelt ist, angeordnet, um eine Bewegung des Fliehgewichts (41) in einer Axialrichtung der Hauptwelle (33) einzuschränken und ein Ende der Kupplungsfeder (83) auf der Seite der Druckplatte zu tragen,
wobei eine Nockenoberfläche (81), die das Fliehgewicht (41) berührt und angeordnet ist, um die Zentrifugalkraft in eine Kraft in der Axialrichtung der Hauptwelle (33) umzuwandeln, auf der gegenüberliegenden Seite der Druckplatte (77) zu der ersten und der zweiten Platte (64, 65) gebildet ist.

3. Die Reibungskupplung (2) gemäß einem vorherigen Anspruch, die eine Mehrzahl erster Platten (64) und eine Mehrzahl zweiter Platten (65) aufweist,
wobei die Mehrzahl erster Platten (64) und die Mehrzahl zweiter Platten (65) abwechselnd entlang der vorbestimmten Richtung angeordnet sind.

4. Die Reibungskupplung (2) gemäß einem vorherigen Anspruch, die einen Umschaltmechanismus (200) aufweist, der angeordnet ist, um ein Drehmoment der Druckplatte (77) aufzunehmen und das Drehmoment in eine Kraft zum Bewegen der Druckplatte (77) in einer Richtung eines Trennens der ersten Platte (64) von der zweiten Platte (65) während einer Kupplungs-Außereingriffnahme durch ein Kupplungsmanipulierelement (24), das die Reibungskupplung (2) außer Eingriff bringt, umzuwandeln.

5. Ein Fahrzeug (1), das folgende Merkmale aufweist:
die Reibungskupplung (2) gemäß einem vorherigen Anspruch;
einen Motor (4); und
ein Antriebsrad (19),
wobei die Reibungskupplung (2) eine Antriebskraft in einer außer Eingriff bringbaren Art und Weise von dem Motor (4) in Richtung des Antriebsrads (19) überträgt.

6. Das Fahrzeug gemäß Anspruch 5, das ein Motorrad ist.

## Revendications

1. Embrayage à friction (2) pouvant fonctionner pour transmettre une force d'entraînement d'un moteur (4), comprenant:
un arbre principal (33) disposé de manière à être entraîné en rotation par le moteur;
un carter d'embrayage (46) comportant une première plaque (64) et disposé de manière à tourner le long de l'arbre principal (33);
un bossage d'embrayage (48) comportant une deuxième plaque (65) opposée à la première plaque (64) dans une direction prédéterminée;
une plaque de pression (77) disposée de manière à tourner selon l'arbre principal (33), et à amener la première plaque (64) et la deuxième plaque (65) en contact l'une avec l'autre par déplacement dans la direction prédéterminée;
un ressort d'embrayage (83) disposé d'un côté opposé de la plaque de pression (77) aux première et deuxième plaques (64, 65) dans la direction prédéterminée, et disposé de manière à appliquer une force dans une direction pour faire entre la première plaque (64) et la deuxième plaque (65) en contact l'une avec l'autre à la plaque de pression (77);
un dispositif de retenue (84) formé de forme sensiblement circulaire, et disposé de manière à recevoir une force de réaction du ressort d'embrayage (83) en supportant une extrémité du ressort d'embrayage (83) opposée à la plaque de pression (77);
une bague de retenue (85) présentant une forme sensiblement circulaire, présentant une fente (85a, 85b) s'étendant dans une direction radiale et formée dans une partie circonférentielle de la bague de retenue (85), disposée de manière à s'adapter dans un côté périphérique intérieur du carter d'embrayage (46), pour verrouiller le dispositif de retenue (84) avec le carter d'embrayage (46) en venant en butée d'un côté opposé du dispositif de retenue (84) contre le ressort d'embrayage (83), où la bague de retenue (85) est configurée pour être empêchée de se déformer radialement vers l'intérieur;
**caractérisé par le fait que**
un arrêtoir (84d) est disposé de manière à empêcher que la bague de retenue (85) ne se déforme radialement vers l'intérieur, où l'arrêtoir (84d) est un élément qui s'interpose entre les extrémités gauche et droite de la bague de retenue (85) à travers la fente (85a, 85b), et où l'arrêtoir (84b, 84c, 84d) est une partie du dispositif de retenue (84).

2. Embrayage à friction (2) selon la revendication 1, comprenant par ailleurs:
un poids centrifuge (41) disposé du côté opposé de la plaque de pression (77) à la première et la deuxième plaque (65), disposé de manière à recevoir une force centrifuge par rotation autour de l'arbre principal (33), et à se déplacer vers une direction centrifuge; et
un siège (78) verrouillé au carter d'embrayage (46), disposé de manière à limiter le mouvement du poids centrifuge (41) dans une direction axiale de l'arbre principal (33), et à supporter une extrémité du ressort d'embrayage (83) du côté de la plaque de pression,
dans lequel une surface à came (81) en contact avec le poids centrifuge (41) et disposée de manière à convertir la force centrifuge en une force dans la direction axiale de l'arbre principal (33) est formée du côté opposé de la plaque de pression (77) aux première et deuxième plaques (64, 65).

3. Embrayage à friction (2) selon l'une quelconque des revendications précédentes, comprenant une pluralité de premières plaques (64) et une pluralité de deuxièmes plaques (65),
dans lequel la pluralité de premières plaques (64) et la pluralité de deuxièmes plaques (65) sont disposées en alternance le long de la direction prédéterminée.

4. Embrayage à friction (2) selon l'une quelconque des revendications précédentes, comprenant un mécanisme de basculement (200) disposé de manière à recevoir un couple de rotation de la plaque de pression (77) et à convertir le couple en une force pour déplacer la plaque de pression (77) dans une direction de séparation de la première plaque (64) de la deuxième plaque (65) au cours d'un débrayage de l'embrayage par un élément de manipulation d'embrayage (24) en débrayage de l'embrayage à friction (2).

5. Véhicule (1) comprenant:
l'embrayage à friction (2) selon l'une quelconque des revendications précédentes;
un moteur (4); et
une roue d'entraînement (19),
dans lequel l'embrayage à friction (2) transmet de manière à pouvoir être découplée une force d'entraînement du moteur (4) en direction de la roue d'entraînement (19).

6. Véhicule selon la revendication 5, qui est une motocyclette.
